(19)

Europäisches
Patentamt
European
Patent Office
Office européen
des brevets

(11) **EP 1 324 476 B1**

(12) **EUROPEAN PATENT SPECIFICATION**

(45) Date of publication and mention
of the grant of the patent:
**29.10.2008 Bulletin 2008/44**

(51) Int Cl.:
***H02M 3/157*** *(2006.01)*　　　***H02M 1/42*** *(2007.01)*

(21) Application number: **01640011.1**

(22) Date of filing: **27.12.2001**

(54) **Converter with inductor and digital controlled timing**

Stromwandler mit Induktor und mit digital gesteuertem Taktgeber

Convertisseur avec inductance et temporisation contrôlée numériquement

(84) Designated Contracting States:
**AT BE CH CY DE DK ES FI FR GB GR IE IT LI LU
MC NL PT SE TR**

(43) Date of publication of application:
**02.07.2003 Bulletin 2003/27**

(73) Proprietor: **Dialog Semiconductor GmbH
73230 Kirchheim/Teck-Nabern (DE)**

(72) Inventor: **Killat, Dirk
73230 Kircheim (DE)**

(74) Representative: **Schuffenecker, Thierry
120 Chemin de la Maure
06800 Cagnes sur Mer (FR)**

(56) References cited:
**EP-A- 0 582 813**　　　**EP-A- 0 735 656**
**EP-A- 0 792 006**　　　**EP-A- 1 049 239**
**DE-C- 3 701 089**　　　**US-A- 6 043 633**

- **"SIMULATING POWER FACTOR CORRECTION
SWITCHING CONVERTERS USING ANALOG
MODELS" IBM TECHNICAL DISCLOSURE
BULLETIN, IBM CORP. NEW YORK, US, vol. 32,
no. 9A, 1 February 1990 (1990-02-01), pages
35-37, XP000082984 ISSN: 0018-8689**
- **WALL S ET AL: "Fast controller design for
practical power-factor correction systems"
INDUSTRIAL ELECTRONICS, CONTROL, AND
INSTRUMENTATION, 1993. PROCEEDINGS OF
THE IECON '93., INTERNATIONAL CONFERENCE
ON MAUI, HI, USA 15-19 NOV. 1993, NEW YORK,
NY, USA,IEEE, 15 November 1993 (1993-11-15),
pages 1027-1032, XP010109104 ISBN:
0-7803-0891-3**

Printed by Jouve, 75001 PARIS (FR)

## Description

## Technical field

The present invention relates to the general subject of electronic power supply converters for energy wherein one example is a boost converter system having a power factor correction (PFC) that is running in discontinuous mode. In order to achieve maximum power transfer by recharging of the boost inductor right after the zero current state is reached, the accuracy of the voltage measurement is increased by calibration of the source and load voltage dividers.

## Background art

The design of a boost converter system with a power factor converter (PFC) requires small storage inductors together with high transferred power. These two parameters are counteracting against each other. The transferred power reaches its maximum if the storage inductor is recharged right after the inductor reaches the zero current state.

Prior art power supplies are using either secondary windings, special voltage comparators or analog current sensing circuits to detect the zero-current state of the storage inductor.

US Patent 5,757,166 to Sodhi teaches a power correction factor boost converter. A secondary winding is used for zero current detection of the storage inductor.

US Patent 5,861,734 to Fasullo et al describes a control system for a boost converter using 2 interleaved boost circuits. A current sensing circuit is provided that senses the current in each of the boost converters. 2 boost converter switches have to be controlled.

US Patent 6,178,104 B1 to Nak-Choon-Choi describes a power factor correction circuit using reverse saw tooth waves. The switch is coupled to a resistor and a capacity that by forming a current detector, detect the current flowing through the storage inductor of the boost converter. The PFC circuit is using reverse saw tooth waves and is controlling the slope of the current.

Fine adjustment of the energy transfer overcoming the limitations of discrete time in digital systems is a known problem. U.S. Patent 6,043,633 to Lev et al. discloses a method and an apparatus for controlling a boost converter that offers power factor correction by compensating for the parasitic capacitance and parasitic oscillations. A zero current detector facilitates the compensation. A dithering method to enhance the time resolution of clocked digital circuits is presented.

EP-A-0 582 813 (IBM) discloses the use of a power FET driven by a pulse generator whose on time is essentially constant over a single line cycle in a critically continuous boost converters used to achieve high power factor and low input current harmonic distortion

DE 37 01 089 C (STANDARD ELEKTRIK LORENZ AG), discloses a process for balancing the two resistors of a voltage divider used in an hybrid integrated circuit.

## Summary of the invention

A principal object of the present invention is to provide a highly effective electronic power supply converter such as a boost converter having maximum power, related to the size the of the storage inductor, transferred without the requirement of a secondary winding or voltage comparators.

A further object of the present invention is to provide a highly effective boost converter with a power factor corrector (PFC) having maximum power, related b the size the of the storage inductor, transferred without the requirement of a secondary winding or voltage comparators.

A further object of the present invention is to recharge the storage inductor right after the point of time when zero current state occurs at the storage inductor. This is key to a maximal transfer of energy.

A still further object of the present invention is to achieve a fine adjustment of the energy transfer to minimise distortion and harmonics overcoming the limitations of discrete time steps in clocked digital systems.

Another still further object of the present invention is to achieve an optimal accuracy of the measurement of the voltages at the source and the load side to achieve best accuracy to define the point of time of the zero current state of the storage inductor and furthermore to achieve best accuracy required as input for the fine-tuning of the energy transferred.

Another still further object of the present invention is to achieve less manufacturing costs and to reduce the number of components required by avoiding secondary windings or voltage comparators for the zero current detection.

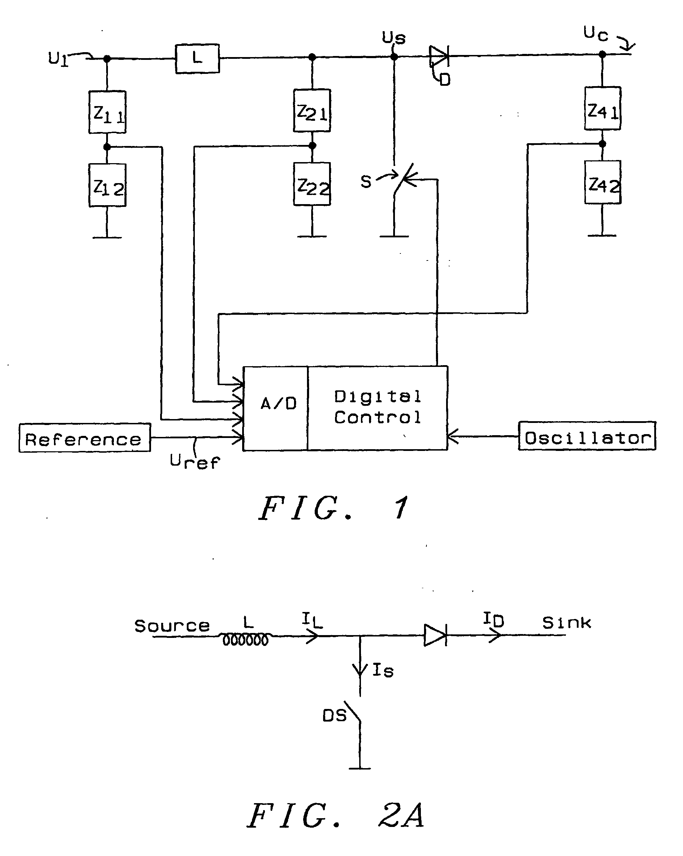

In accordance with the objects of this invention a system used for converting electronic power supply energy has been achieved, which is defined in independent claim 1 . This system can be used as a boost converter or a DC to DC converter. Maximal power is transferred by recharging the storage inductor right after the point of time when zero current occurs at the storage inductor, As an example of the usage of the invention a boost converter with PFC (power-factor-corrector) having maximal power transferred related to the size of the storage inductor by recharging the storage inductor right after the point of time when zero current state occurs at the storage inductor is achieved. Fig. 1 illustrates the main components of the system. The boost converter is including a storage inductor coupled to an input voltage, a shunt switch controlling a current flowing through said storage inductor and a rectifying diode for rectifying the output voltage. Furthermore the system comprises of an analogue/digital converter which is converting analogue values measured and reference voltages into digital values required by a digital control unit to control frequency and pulse width of the shunt switch using means to calculate the point of time when zero current state occurs instead of detecting this point of time using secondary windings or other analog circuits. Said digital control unit initiates the recharging of the storage inductor right after the point of time of the zero current state is reached.

In accordance with an object of the invention a method of calculating the point of time of the zero current state of the storage inductor is achieved which is defined in independent claim 15. Said point of time is calculated using an equation based on the ON time of said shunt switch and the voltages measured at the source side (rectified mains supply) and the load side. A safety margin to balance inaccuracies of the measurement is added to this calculated point of time.

In accordance with another object of the invention to minimize distortion and harmonics a fine adjustment of the energy transfer through fine tuning of the pulse width of the shunt switch is introduced overcoming the limitations of discrete time steps in clocked digital systems. This is achieved by either using patterns or by a digital delta sigma modulator that is averaging the ON time values of the shunt switch by toggling between neighboring ON time values (pulse-width) and controlled by said digital control unit.

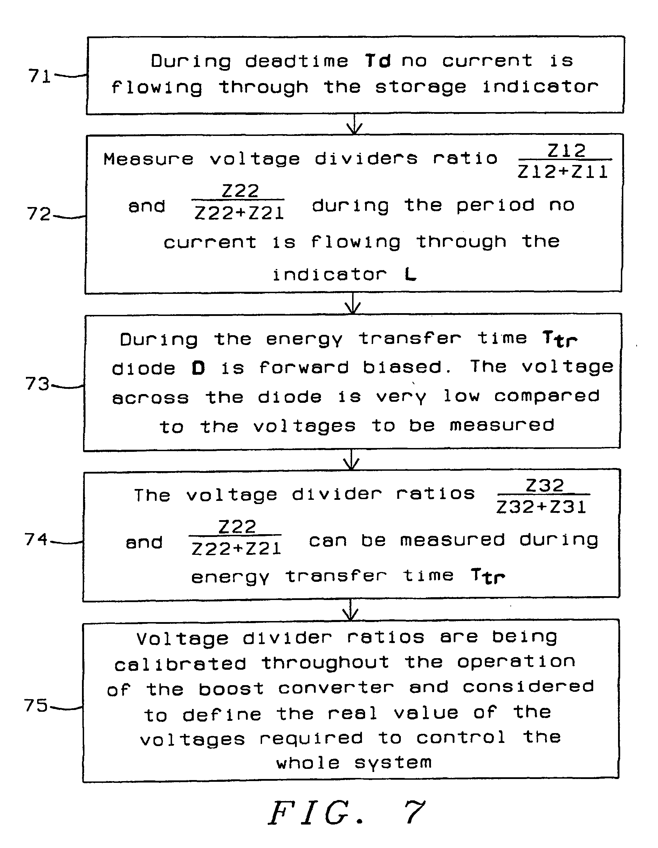

In accordance to the object of this invention the calculation of the point of time of the zero current state of the storage inductor and the fine-tuning of the energy transferred require a very high accuracy of the measurement of the voltages at the load side, the inductor side and at the source side. This is achieved by a calibration of the tolerances of the voltage dividers used for these measurements. The voltage divider ratios can be measured at appropriate periods of time (see Fig. 7) considering the small influence of the voltage of the forward bias of the diode in the magnitude of 0.7volt hence. This calibration enables the usage of tolerant voltage dividers. Said digital control unit is controlling the calibration of said voltage dividers.

In accordance with the objects of the invention said three methods of (1) calculating the point of time of the zero state of the storage inductor and (2) of fine-tuning the energy transfer and (3) of calibrating the voltage dividers to improve the accuracy of the voltages measured can all be used separately or used in any combinations together.

**Description of the drawings**

In the accompanying drawings forming a material part of this description, there is shown:

Fig.**1** illustrates the preferred principal embodiment of the PFC (Power-Factor-Corrector) boost converter consisting of one storage inductor, a rectifier diode, a shunt switch, voltage dividers and a control unit containing an analog-to-digital converter, a delta-sigma modulator and a logical unit.

Fig.**2A** illustrates the principal currents of the power supply.

Fig. **2B** illustrates the waveforms of the currents of Fig. **2A** as functions of the switch **S**.

Fig. **3** illustrates the flow of the current $I_L$ through the storage inductor dependent of the ON time of the switch and the transfer time $T_{TR}$ of the energy.

Fig. **4** illustrates the principal wave form of the current through the storage inductor $I_L$ related to the ON time of the switch and the period and the amount of energy transfer **Euc** related to the ON time.

Fig. **5** illustrates one method how the point of time of zero current is calculated.

Fig. **6** illustrates one method how to do the fine adjustment of the energy transferred.

Fig. **7** illustrates one method how to improve the accuracy of voltage measurement by calibrating the voltage dividers.

**Description of the preferred embodiments**

The preferred embodiments disclose a novel system used as converters for energy in electronic power supply systems. Said system, running in discontinuous mode, can be used in simple boost converters or in boost converters having a PFC (power-factor-correction) or can be used as an DC-to-DC converter that is running in a discontinuous mode. Some parts of the invention are applicable to other power electronic systems as well. The design of such converters requires small inductors together with maximal power transferred. These two parameters are counteracting against each other. The power transferred reaches its maximum when the storage inductor is recharged immediately after reaching the zero current state. For the detection of the zero current generally a secondary winding at the storage inductor is used. As an example of the invention a configuration of the principal components of a boost converter with PFC is shown in Fig. **1.** The main components are the storage inductor **L,** the rectified main supply $U_1$, the shunt switch **S,** the rectifier diode **D,** the voltage dividers pairs $Z_{11}$ - $Z_{12}$, $Z_{21}$ - $Z_{22}$ and $Z_{41}$ - $Z_{42}$ are used for the measurement of the voltages of the mains supply $U_1$, the voltage of the inductor output $U_S$, the voltage at the load side $U_C$, the reference voltage $U_{ref}$ and a oscillator driven digital control unit to control the frequency and pulse width of the shunt switch S.

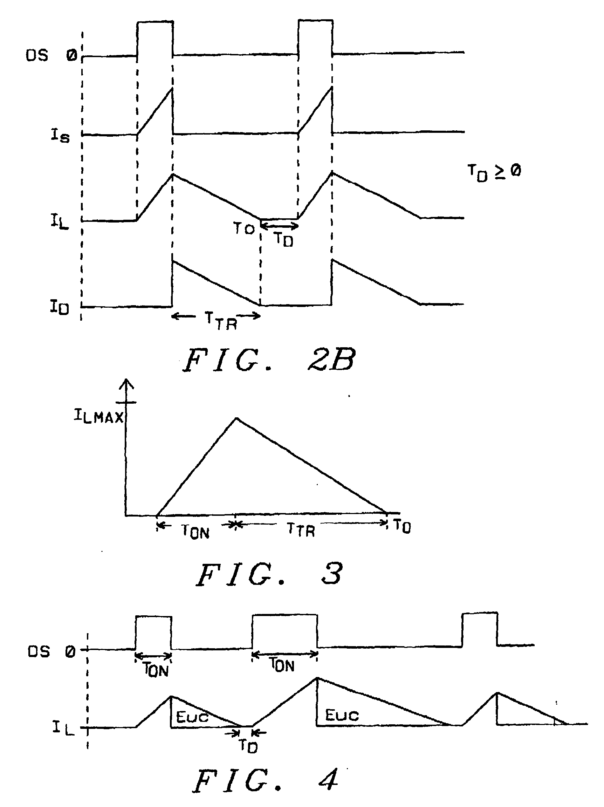

Fig. **2A** shows the principal layout of a boost converter and Fig. **2B** shows the flow of the currents flowing through the storage inductor **L**, the shunt switch **S** and the rectifying diode **D.** Said boost converter is operating in a discontinuous mode. The current Is starts to flow after the switch **S** is closed (or ON), the current $I_L$ is rising as long the switch **S** is ON (short pulse width) and is decreasing during the time period $T_{TR}$. The time period $T_D$ describes the time period when no current is flowing. In a discontinuous mode this time period must be equal or greater than zero. The current $I_D$ at the load side starts to flow when the switch **S** is opened (or in OFF state) and is decreasing during the period of energy transfer $T_{TR}$.

This invention proposes to calculate the point of time when the current through the storage inductor $I_L$ reaches the zero state. This happens always after the switch S is opened with the delay $T_{TR}$. $T_{TR}$ is the period of energy transfer. $T_{TR}$ can be calculated using the ON time $T_{on}$ of the switch and the voltages $U_1$ and $Uc$. The voltage across the storage inductor is

$$U_L = L * \frac{dI}{dt}$$

The maximum current through the storage inductor (see Fig. **3** and Fig.**2 A+B**) is

$$I_{LMAX} = \frac{U_1 - U_S}{L} * T_{ON}$$

During the time period the switch is closed the voltage $U_s$ equals zero. This means

$$I_{LMAX} = \frac{U_1}{L} * T_{ON}$$

The transfer time $T_{TR}$ of the current **ID** is therefore

$$T_{TR} = \frac{I_{LMAX} * L}{U_S - U_1} = \frac{U_1 * T_{ON}}{U_S - U_1}.$$

The forward voltage of the diode **D** is in the range of 0.7 Volts. In the forward mode

$$U_S = Uc + 0.7 \text{ volts}$$

The final equation to calculate the transfer time is

$$T_{TR} = \frac{U_1 * T_{on}}{Uc + 0.7V - U_1}$$

Using this equation the point of time $T_0$ of the zero current state of the current $I_L$ can be calculated.

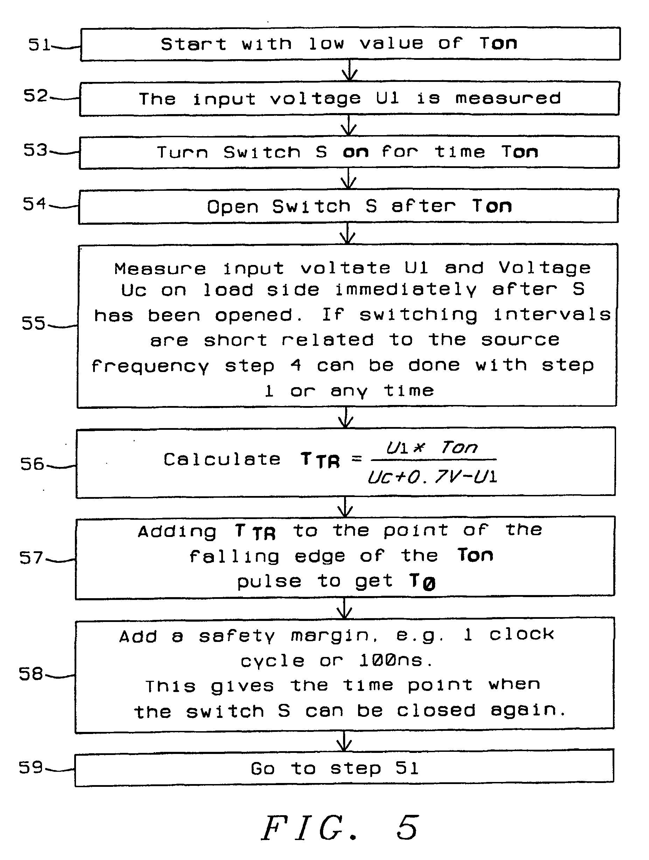

A method how to calculate said $T_0$ is illustrated in Fig. **5.** When the total system is inactive

$$U_1 = U_S = Uc + 0.7 \text{ volts.}$$

In step **51** the system starts with a low value of $T_{on}$ to avoid saturation of **L.** In step **52** the input voltage $U_1$ is measured. In step **53** the shunt switch is closed for time $T_{on}$. In step **54** the switch **S** is opened after the pulse width $T_{on}$. In the next step **55** the voltages $U_1$ at the source side and $U_C$ at the load side are measured immediately after the switch is opened. Usually the switching frequency of the converter is much higher than the mains frequency or the variation of the voltage $U_C$. If switching intervals are short related to the frequency of the mains supply, which is the case under normal conditions of operations, these measurements can be performed any time but preferably in step **52** already when the input voltage $U_1$ is measured and step **55** can be skipped. The noise level of $U_1$ and $U_c$ is much lower than at $U_s$. In step **56** the digital control is calculating the transfer time period $T_{TR}$ according to the equation above. In step **57** $T_{TR}$ is added to the falling edge of the $T_{on}$ pulse to get the point of time $T_0$ of the zero current state of the current $I_L$. In step **58** a safety margin of e.g. 1 clock cycle or 100ns is added before the next cycle starts with step **52** again. This safety margin is required to avoid the risk that the converter goes into a continuous mode with great power dissipation. Above-mentioned method is used to define the frequency of the boost converter system.

The amount of energy transferred is mainly a function of the pulse width $T_{on}$. Fig. **4** illustrates how the pulse width $T_{on}$ correlates to the energy transferred $E_{UC}$. Power converters, that make low distortion and harmonics, need a fine adjustment of the ON time of the switch. But in digital systems the ON-time is discrete. In order to overcome the discreteness of the time steps an averaging of neighbouring discrete ON time values (pulse width) is introduced.

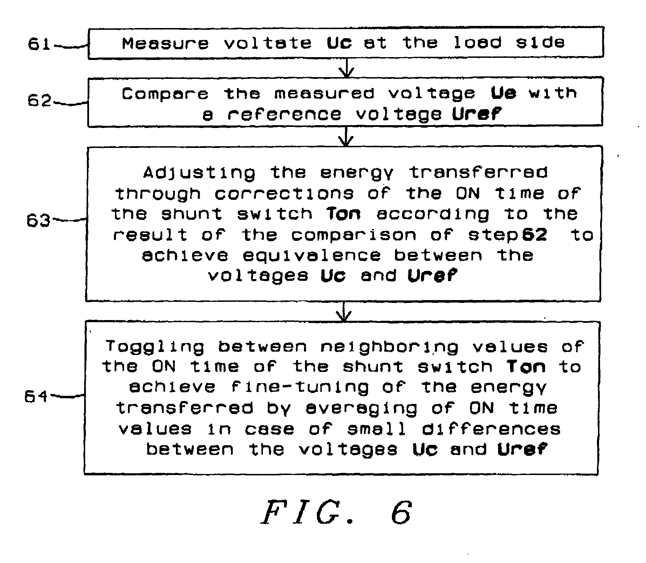

The method used for the fine adjustment of energy is illustrated in Fig. **6**. In step **61** the voltage at the load side $U_c$ is monitored through the voltage divider $Z_{41}$ and $Z_{42}$ and by the **A/D converter** of Fig.**1**. In step **62** the digital control unit compares $U_c$ with the reference voltage $U_{ref}$ (see Fig.**1**) digitised as well by said **A/D converter.** In step **63+64** the digital control unit is adjusting the pulse-width $T_{on}$ according to the comparison result of $U_c$ and $U_{ref}$ and is increasing or reducing the pulse-width $T_{on}$ accordingly to reach equivalence between $U_c$

and $U_{ref}$ in order to adjust the energy transferred. In the step **63** the gross adjustment is done. In case of small differences between $U_c$ and $U_{ref}$ step **64** illustrates the averaging of neighboring $T_{on}$ values to fine-tune the energy transferred. The averaging is done by either using defined patterns to vary the on time of the switch ("toggling") in minimal steps possible or by using digital delta-sigma modulation with a multilevel quantifier. One digital quantifier level corresponds to the period to load the storage inductor. The delta-sigma principle as an averaging principle makes the use of digital systems with moderate clock frequency possible. This fine adjustment of the ON time using a digital delta sigma modulator is very useful for a SEPIC (single ended primary inductor converter) when the load variation is large and the ON times of the switch are short. For the time period a SEPIC is inactive, $U_c$ = 0. Increasing switching frequency and increasing $T_{on}$ increases $U_c$ in all systems used.

For the said calculation of the point of time of the zero current state in the storage inductor and for the control of the pulse-width $T_c$ by said comparison of $U_c$ and $U_{ref}$ an accurate measurement of the voltage at the source side $U_1$, the voltage on the storage inductor $U_s$ and the voltage at the load side $U_c$ is necessary (see Fig. **1**). This invention proposes to increase the accuracy of the measurement with a calibration of the voltage dividers

$$\frac{Z11}{Z12}, \frac{Z21}{Z22} \text{ and } \frac{Z31}{Z32}$$ (see Fig. 1) to overcome the tolerances of the voltage dividers. This enables the usage of tolerant voltage dividers without losing accuracy of the measurement.

Fig. **7** illustrates the method how and during which time periods the calibration can be performed. Step **71+72** explain the period of zero current state of the storage inductor is used to measure the ratios of the voltage

dividers $$\frac{Z11}{Z11+Z12} \text{ and } \frac{Z21}{Z21+Z22}.$$ Step **73+74**

explain that during the energy transfer period **TTR** the diode **D** is forward biased. The voltage across the diode **D** is well known, it is about 0.7 Volts and much lower than the voltage to be measured. During the forward bias of the diode **D** the voltage at the storage inductor **US** equals the voltage at the load side **Uc** plus 0.7Volts. Hence the voltage divider ratios $$\frac{Z32}{Z32+Z31} \text{ and } \frac{Z22}{Z21+Z22}$$

can be measured. The digital control unit uses the measured values of the voltage divider ratios to calculate more precisely the point of time of the zero current state and to control more precisely the pulse width **Ton.**

The methods of **(1)** calculating the point of time of the zero current state of the storage inductor (Fig. **5)** and of **(2)** of fine-adjusting of the energy transferred (Fig. **6)** and of **(3)** improving the accuracy of voltage measurements by calibrating the voltage dividers (Fig. **7**) can be used either individually or together in any combination. The highest efficiency of this kind of power supply combined with minimal distortion and harmonics will be achieved by a combination all three said methods together. For more simple requirements a solution could be achieved with just one or two of said methods.

## Claims

1. A discontinous mode boost converter comprising:

   - a storage inductor (L) coupled to an input voltage (U1).
   - a shunt switch (S) controlling a current flowing through said storage inductor (L),
   - a rectifying means (D) for rectifying the output voltage (Uc),
   - voltage dividers (Z11, Z12, Z21, Z22, Z31, Z32) at the source side, the load side and at the load side of the inductor (L),
   - an A/D converter (A/D) to convert the measurement results to digital values and
   - a digital control means (Digital Control) to calibrate the voltage divider ratios; the converter being **characterized in that** the digital control means (Digital Control) is adapted to :
   - measure the ratios of the voltage dividers at the source side (Z11, Z12) and at the load side (Z21, Z22) of the storage inductor (L) during the short time periode when no current is flowing through the inductor (L);
   - measure the ratios of the voltage dividers at the output side (Z31, Z32) of the boost converter and at the output side of the storage inductor (Z21, Z22) during the period of time energy is transferred and the rectifying means (D) is forward biased and hence the voltage at the rectifying means (D) is low compared to the voltages measured; and
   - calibrate the voltage divider ratios thoughout the operation of the boost converter, wherein the calibrated voltage divider ratios are considered to define the real value of the voltages required to control the whole system.

2. The system of claim **1** wherein a power-factor-corrector is used in said boost converter system.

3. The system of Claim **1** wherein said digital control means is using means on the basis of the ON time of said shunt switch and the voltages measured at the source side and at the load side to calculate the point of time when zero current state occurs adding a safety margin to balance inaccuracies of the measurement if required and furthermore initiate the recharging of the storage inductor by said digital control unit right after this point of time.

**4.** The system of claim **3** wherein a power-factor-corrector is used in said boost converter system.

**5.** The system of Claim **1** wherein said digital control means is using means on the basis of the voltage measured at the load side and of a comparison of said voltage with a reference voltage to fine-adjust the energy transferred by fine-tuning the pulse width of said shunt switch minimising distortion and harmonics overcoming the limitations of discrete time steps in clocked digital systems by toggling between neighbouring ON time values using averaging ON time values of said switch using patterns or a digital delta sigma modulator.

**6.** The system of claim 5 wherein a power-factor-corrector is used in said boost converter system.

**7.** The system of Claim **1** wherein the accuracy of measurements of voltages required to control the system is improved by using voltage dividers wherein their voltage divider ratios are being calibrated through the operation of the system and said calibrated voltage divider ratios are being considered to define the precise value of the voltages.

**8.** The system of claim **7** wherein a power-factor-corrector is used in said boost converter system.

**9.** The system of claim **3** wherein said digital control means is using means on the basis of the ON time of said shunt switch and the voltages measured at the source side and at the load side to calculate the point of time when zero current state occurs adding a safety margin to balance inaccuracies of the measurement if required and furthermore initiate the recharging of the storage inductor by said digital control unit right after this point of time wherein said digital control means is using means on the basis of the voltage measured at the load side and of a comparison of said voltage with a reference voltage to fine-adjust the energy transferred by fine-tuning the pulse width of said shunt switch minimising distortion and harmonics overcoming the limitations of discrete time steps in clocked digital systems by toggling between neighboring ON time values using averaging ON time values of said switch using patterns or a digital delta sigma modulator.

**10.** The system of claim **9** wherein a power-factor-corrector is used in said boost converter system.

**11.** The system of Claim **3** wherein said digital control means is using means on the basis of the ON time of said shunt switch and the voltages measured at the source side and at the load side to calculate the point of time when zero current state occurs adding a safety margin to balance inaccuracies of the measurement if required and furthermore initiate the recharging of the storage inductor by said digital control unit right after this point of time wherein the accuracy of measurements of voltages required to control the system is improved by using voltage dividers wherein their voltage divider ratios are being calibrated through the operation of the system and said calibrated voltage divider ratios are being considered to define the precise value of the voltages.

**12.** The system of claim 11 wherein a power-factor-corrector is used in said boost converter system.

**13.** The system of Claim **5** wherein said digital control means is using means on the basis of the voltage measured at the load side and of a comparison of said voltage with a reference voltage to fine-adjust the energy transferred by fine-tuning the pulse width of said shunt switch minimising distortion and harmonics overcoming the limitations of discrete time steps in clocked digital systems by toggling between neighboring ON time values (pulse width) using averaging ON time values of said switch using patterns or a digital delta sigma modulator wherein the accuracy of measurements of voltages required to control the system is improved by using voltage dividers wherein their voltage divider ratios are being calibrated through the operation of the system and said calibrated voltage divider ratios are being considered to define the precise value of the voltages.

**14.** the system of claim **13** wherein a power-factor-corrector is used in said boost converter system.

**15.** A method to improve the accuracy of the measurement of the voltages required to control a discontinuous mode boost converter, such method using a calibration of the tolerances of voltage dividers at the load side, the Inductor side and at the source side at appropriate periods of time through a measurement of the voltage divider ratio, considering the small influence of the voltage of the forward bias of the diode hence enabling the usage of tolerant voltage dividers, said method comprising:

- providing a discontinuous mode boost converter which includes a storage inductor (L) coupled to an input voltage (U1), a shunt switch (S) controlling a current flowing through said storage inductor (L), a rectifying means (D) for rectifying the output voltage (Uc) and voltage dividers (Z11, Z12, Z21, Z22, Z31, Z32) at the source side, the load side and at the load side of the inductor (L), an A/D converter (A/D) to convert the measurement results to digital values and a digital control means (Digital Control) tto calibrate the voltage divider ratios;

the method being **characterized by** the following steps:

- measuring the ratios of the voltage dividers at the source side (Z11, Z12) and at the load side (Z21, Z22) of the storage inductor (L) during the short time period when no current is flowing through the inductor (L);
- measuring the ratios of the voltage dividers at the output side (Z31, Z32) of the boost converter and at the output side of the storage inductor (Z21, Z22) during the period of time energy is transferred and the rectifying means (D) is forward biased and hence the voltage at the rectifying means (D) is low compared to the voltages measured; and
- calibrating the voltage divider ratios throughout the operation of the boost converter wherein the calibrated voltage divider ratios are considered to define the real value of the voltages required to control the whole system.

16. A method according to claim 15 further comprising fine adjustment of the energy transfer by fine-tuning the pulse width of the shunt switch , said method comprising;

- providing a boost converter which includes a storage inductor coupled to an input voltage, a shunt switch controlling a current flowing through said storage inductor, a rectifying means for rectifying the output voltage and voltage dividers at the source side, the load side and at the load side of the inductor, an A/D converter to convert measurement results and reference voltages to digital values and a digital control means to control frequency and pulse width of said shunt switch;
- measuring the ratios of the voltage dividers at the output side of the boost converter during the period of time energy is transferred;
- measuring the voltage at the load side;
- comparing said voltage at the load side with a reference voltage;
- adjusting the energy transferred through corrections of the ON time of said shunt switch according to the results of said comparisons to achieve equivalence between the output voltage and the reference voltage; and
- toggling between neighbouring values of the ON time of the shunt switch (**TON**) to achieve fine-tuning of the energy transferred by averaging of ON time values in case of small differences between the voltage at the load side (**UC**) and the reference voltage (**UREF**).

17. A method according to claim 15 further comprising calculating the point of time of the zero current state of the storage inductor , said method involving;

- providing a boost converter which includes a storage inductor coupled to an input voltage, a shunt switch controlling a current flowing through said storage inductor, a rectifying means for rectifying the output voltage and voltage dividers at the source side, the load side and at the load side of the Inductor, an A/D converter to convert measurement results and reference voltages to digital values and a digital control means to control frequency and pulse width of said shunt switch;
- measuring the ratios of the voltage dividers at the source side and at the load side of the storage inductor during the short time period when no current is flowing through the inductor;
- measuring the input voltage considering the measured ratios of the voltage divider at the source side;
- turning on said shunt switch for a time;
- opening said shunt switch after said time;
- measuring the ratios of the voltage dividers at the output side of the boost converter and at the output side of the storage inductor during the period of time energy is transferred and the rectifying means is forward biased and hence the voltage at e.g. the diode is low compared to the voltages measured;
- measuring of the input voltage and the voltage on the load side immediately after said shunt switch has been opened considering the measured ratios of the voltage dividers at the source and at the load side, if switching intervals are short related to the source frequency said measurements can be performed at same time as above mentioned measurement of the input voltage just before turning on the shunt switch;
- calculating said point of time of the zero current state; and
- adding the said point of time of the zero current state to the point of the falling edge of the said time and add additionally a safety margin, if required, to get the point of time when said switch can be closed again.

18. The method of Claim 17 wherein a diode is used for rectifying and the point of time of zero current is calculated using the equation

$$\mathbf{T_{TR}} = \frac{U_1 * T_{on}}{Uc + 0.7V - U_1}$$

wherein **U1** is the measured voltage at the source side and **UC** is the voltage measured at the load side and **TON** is the pulse width of the said shunt switch.

**19.** The method of claim 17 comprising;

- providing a boost converter which includes a storage inductor coupled to an input voltage, a shunt switch controlling a current flowing through said storage inductor, a rectifying means for rectifying the output voltage and voltage dividers at the source side, the load side and at the load side of the inductor, an A/D converter to convert measurement results and reference voltages to digital values and a digital control means to control frequency and pulse width of said shunt switch;
- measuring the input voltage;
- turning on said shunt switch for a time;
- opening said shunt switch after said time;
- measuring of the input voltage and the voltage on the load side immediately after said shunt switch has been opened, if switching intervals are short related to the source frequency said measurements can be performed at same time as above mentioned measurement of the input voltage just before turning on the shunt switch;
- comparing the measured voltage at the load side with the reference voltage;
- adjusting the energy transferred through corrections of the ON time of said shunt switch according to the results of said comparisons to achieve equivalence between the output voltage and the reference voltage; toggling between neighboring values of the ON time of the shunt switch (**TON**) to achieve fine-tuning of the energy transferred by averaging of ON time values in case of small differences between the voltage at the load side and the reference voltage;
- calculating said point of time of the zero current state;
- calculating said point of time of the zero current state; and
- adding the said point of time of the zero current state to the point of the falling edge of the said time and add additionally a safety margin, if required, to get the point of time when said switch can be closed again.

**20.** The method of Claim 19 wherein a diode is used for rectifying and the point of time of zero current is calculated using the equation

$$\mathbf{T_{TR}} = \frac{U_1 * T_{on}}{U_C + 0.7V - U_1}$$

wherein **U1** is the measured voltage at the source side and **UC** is the voltage measured at the load side and **TON** is the pulse width of the said shunt switch.

**Patentansprüche**

**1.** Boost-Converter für diskontinuierlichen Betrieb mit:

- einer Speicherspule (L), die an eine Eingangsspannung (U1) angeschlossen ist,
- einem Nebenschlussschalter (S), der einen durch besagte Speicherspule (L) fließenden Strom steuert,
- einem Gleichrichtermittel (D) zum Gleichrichten der Ausgangsspannung (UC),
- Spannungsteilern (Z11, Z12, Z21, Z22, Z31, Z32) auf der Seite der Stromquelle, der Lastseite und der Lastseite der Spule (L),
- einem A/D-Umformer (A/D) zur Konvertierung der Messergebnisse in digitale Werte, und
- einem digitalen Steuerungsmittel (Digitale Steuerung) zur Kalibrierung der Teilungsverhältnisse der Spannungsteiler, wobei der Boost-Converter **dadurch gekennzeichnet ist, dass** das digitale Steuerungsmittel (Digitale Steuerung) dazu geeignet ist:

- die Teilungsverhältnisse der Spannungsteiler auf der Seite der Stromquelle (Z11, Z12) und auf der Lastseite (Z21, Z22) der Speicherspule (L) während des kurzen Zeitraums zu messen, in dem kein Strom durch die Drossel (L) fließt;
- die Teilungsverhältnisse der Spannungsteiler auf der Ausgangsseite (Z31, Z32) des Boost-Converters und auf der Ausgangsseite (Z21, Z22) der Speicherspule während des Zeitraums zu messen, in dem Energie übertragen wird und das Gleichrichtermittel (D) unter Vorwärtsspannung steht, so dass die Spannung am Gleichrichtermittel (D) im Vergleich zu den gemessenen Spannungen niedrig ist; und
- die Teilungsverhältnisse der Spannungsteile während des Betriebs des Boost-Converters zu kalibrieren, wobei die kalibrierten Teilungsverhältnisse der Spannungsteiler als Definition des tatsächlichen Werts der Spannungen gelten, die für die Steuerung des gesamten Systems erforderlich sind.

**2.** System nach Anspruch 1, wobei in besagtem Boost-Converter-System ein Leistungsfaktorkorrektor verwendet wird.

**3.** System nach Anspruch 1, wobei das besagte digitale Steuerungsmittel Mittel auf der Basis der Einschaltzeit des besagten Nebenschlussschalters und der auf der Seite der Stromquelle und der Lastseite gemessenen Spannungen verwendet, um den Zeitpunkt zu berechnen, in dem ein stromloser Zustand eintritt, wodurch bei Bedarf eine Sicherheitsmarge zum Ausgleich von Messungenauigkeiten hinzugefügt und darüber hinaus das erneute Laden der Speicherspule durch die besagte digitale Steuerung direkt nach diesem Zeitpunkt eingeleitet wird.

4. System nach Anspruch 3, wobei in besagtem Boost-Converter-System ein Leistungsfaktorkorrektor verwendet wird.

5. System nach Anspruch 1, wobei das besagte digitale Steuerungsmittel Mittel auf der Grundlage der auf der Lastseite gemessenen Spannung und eines Vergleichs besagter Spannung mit einer Bezugsspannung verwendet, um die übertragene Energie durch Feineinstellung der Impulsbreite des besagten Nebenschlussschalters präzise anzupassen und damit Verzerrungen und Oberschwingungen zu minimieren. Dadurch werden die Grenzen diskreter Zeitschritte in taktgesteuerten digitalen Systemen durch das Umschalten zwischen benachbarten Einschaltzeitwerten mit Durchschnittsbildung der Einschaltzeitwerte des besagten Schalters unter Verwendung von Mustern oder eines digitalen Delta-Sigma-Modulators überwunden.

6. System nach Anspruch 5, wobei in besagtem Boost-Converter-System ein Leistungsfaktorkorrektor verwendet wird.

7. System nach Anspruch 1, wobei die für die Steuerung des Systems erforderliche Präzision der Spannungsmessungen durch die Verwendung von Spannungsteilern verbessert wird, deren Teilungsverhältnisse durch den Betrieb des Systems kalibriert werden und dann zur Definition der genauen Spannungswerte herangezogen werden.

8. System nach Anspruch 7, wobei in besagtem Boost-Converter-System ein Leistungsfaktorkorrektor verwendet wird.

9. System nach Anspruch 3, wobei das besagte digitale Steuerungsmittel Mittel auf der Basis der Einschaltzeit des besagten Nebenschlussschalters und der auf der Seite der Stromquelle und der Lastseite gemessenen Spannungen verwendet, um den Zeitpunkt zu berechnen, in dem ein stromloser Zustand eintritt, wodurch bei Bedarf eine Sicherheitsmarge zum Ausgleich von Messungenauigkeiten hinzugefügt und darüber hinaus das erneute Laden der Speicherspule durch die besagte digitale Steuerung direkt nach diesem Zeitpunkt eingeleitet wird und wobei das besagte digitale Steuerungsmittel Mittel auf der Grundlage der auf der Lastseite gemessenen Spannung und eines Vergleichs besagter Spannung mit einer Bezugsspannung verwendet, um die übertragene Energie durch Feineinstellung der Impulsbreite des besagten Nebenschlussschalters präzise anzupassen und damit Verzerrungen und Oberschwingungen zu minimieren, wodurch die Grenzen diskreter Zeitschritte in taktgesteuerten digitalen Systemen durch das Umschalten zwischen benachbarten Einschaltzeitwerten mit Durchschnittsbildung der Einschaltzeitwerte des besagten Schalters unter Verwendung von Mustern oder eines digitalen Delta-Sigma-Modulators überwunden werden.

10. System nach Anspruch 9, wobei in besagtem Boost-Converter-System ein Leistungsfaktorkorrektor verwendet wird.

11. System nach Anspruch 3, wobei das besagte digitale Steuerungsmittel Mittel auf der Basis der Einschaltzeit des besagten Nebenschlussschalters und der auf der Seite der Stromquelle und der Lastseite gemessenen Spannungen verwendet, um den Zeitpunkt zu berechnen, in dem ein stromloser Zustand eintritt, wodurch bei Bedarf eine Sicherheitsmarge zum Ausgleich von Messungenauigkeiten hinzugefügt und darüber hinaus das erneute Laden der Speicherspule durch die besagte digitale Steuerung direkt nach diesem Zeitpunkt eingeleitet wird und wobei die für die Steuerung des Systems erforderliche Präzision der Spannungsmessungen durch die Verwendung von Spannungsteilern verbessert wird, deren Teilungsverhältnisse durch den Betrieb des Systems kalibriert werden und dann zur Definition des genauen Spannungswerts herangezogen werden.

12. System nach Anspruch 11, wobei in besagtem Boost-Converter-System ein Leistungsfaktorkorrektor verwendet wird.

13. System nach Anspruch 5, wonach das besagte digitale Steuerungsmittel Mittel auf der Basis der auf der Lastseite gemessenen Spannung und eines Vergleichs der besagten Spannung mit einer Bezugsspannung verwendet, um die übertragene Energie durch Feineinstellung der Impulsbreite des besagten Nebenschlussschalters präzise anzupassen und damit Verzerrungen und Oberschwingungen zu minimieren. Dadurch werden die Grenzen diskreter Zeitschritte in taktgesteuerten digitalen Systemen durch das Umschalten zwischen benachbarten Einschaltzeitwerten (Impulsbreite) des besagten Schalters mit Bildung ihres Durchschnitts unter Verwendung von Mustern oder eines digitalen Delta-Sigma-Modulators überwunden,
wobei die für die Systemsteuerung erforderliche Genauigkeit der Spannungsmessungen durch die Verwendung von Spannungsteilern verbessert wird, deren Teilungsverhältnisse durch den Systembetrieb kalibriert werden und dann zur Definition des genauen Spannungswerts herangezogen werden.

14. System nach Anspruch 13, wobei in besagtem Boost-Converter-System ein Leistungsfaktorrektor verwendet wird.

15. Verfahren zur Verbesserung der für die Steuerung eines Boost-Converters für diskontinuierlichen Betrieb erforderlichen Genauigkeit der Spannungsmessung, für das in geeigneten Zeitabständen durch Messung des Teilungsverhältnisses der Spannungsteiler eine Kalibrierung der Toleranzen der Spannungsteiler auf der Lastseite, der Drosselseite und der Seite der Stromquelle verwendet wird, wobei in Anbetracht des geringen Einflusses der Spannung der Diodenvorspannung die Verwendung von toleranten Spannungsteilern möglich wird. Das besagte Verfahren umfasst

   - die Bereitstellung eines Boost-Converters für diskontinuierlichen Betrieb mit einer an eine Eingangsspannung (U1) angeschlossenen Speicherspule (L), einem Nebenschlussschalter (S) zur Steuerung eines durch besagte Speicherspule (L) fließenden Stroms, einem Gleichrichtermittel (D) zum Gleichrichten der Ausgangsspannung (UC) und mit Spannungsteilern (Z11, Z12, Z21, Z22, Z31, Z32) auf der Seite der Stromquelle, der Lastseite und der Lastseite der Drossel (L), einem A/D-Umformer (A/D) zur Konvertierung der Messergebnisse in digitale Werte, und einem digitalen Steuerungsmittel (Digitale Steuerung) zur Kalibrierung der Teilungsverhältnisse der Spannungsteiler;

   wobei das Verfahren durch folgende Schritte **gekennzeichnet** ist:

   - Messung der Teilungsverhältnisse der Spannungsteiler auf der Seite der Stromquelle (Z11, Z12) und auf der Lastseite (Z21, Z22) der Speicherspule (L) während des kurzen Zeitraums, in dem durch die Drossel (L) kein Strom fließt;
   - Messung der Teilungsverhältnisse der Spannungsteiler auf der Ausgangsseite (Z31, Z32) des Boost-Converters und auf der Ausgangsseite (Z21, Z22) der Speicherspule während des Zeitraums, in dem Energie übertragen wird und das Gleichrichtermittel (D) unter Vorwärtsspannung steht, so dass die Spannung am Gleichrichtermittel (D) im Vergleich zu den gemessenen Spannungen niedrig ist; und
   - Kalibrierung der Teilungsverhältnisse der Spannungsteiler während des Betriebs des Boost-Converters, wobei die kalibrierten Teilungsverhältnisse der Spannungsteiler zur Definition des tatsächlichen Werts der Spannungen herangezogen werden, die für die Steuerung des gesamten Systems erforderlich sind.

16. Verfahren nach Anspruch 15, das weiterhin aus der präzisen Anpassung der Energieübertragung durch Feineinstellung der Impulsbreite des Nebenschlussschalters und den folgenden weiteren Schritten besteht:

   - Bereitstellung eines Boost-Converters mit einer an eine Eingangsspannung angeschlossenen Speicherspule, einem Nebenschlussschalter zur Steuerung eines durch besagte Speicherspule fließenden Stroms, einem Gleichrichtermittel zum Gleichrichten der Ausgangsspannung und mit Spannungsteilern auf der Seite der Stromquelle, der Lastseite und der Lastseite der Drossel, einem A/D-Wandler zur Konvertierung der Messergebnisse und Bezugsspannungen in digitale Werte, und einem digitalen Steuerungsmittel zur Steuerung der Frequenz und der Impulsbreite des besagten Nebenschlussschalters;
   - Messung der Teilungsverhältnisse der Spannungsteiler auf der Ausgangsseite des Boost-Converters während des Zeitraums, in dem Energie übertragen wird;
   - Messung der lastseitigen Spannung;
   - Vergleich der besagten lastseitigen Spannung mit einer Bezugsspannung;
   - Anpassung der übertragenen Energie anhand von Korrekturen der Einschaltzeit des besagten Nebenschlussschalters entsprechend den Ergebnissen der besagten Vergleiche, um eine Äquivalenz zwischen der Ausgangs- und der Bezugsspannung zu erhalten; und
   - Umschalten zwischen benachbarten Werten der Einschaltzeit des Nebenschlussschalters ($T_{ON}$), um im Fall geringer Unterschiede zwischen der lastseitigen Spannung (Uc) und der Bezugsspannung ($U_{REF}$) eine Feineinstellung der übertragenen Energie durch Durchschnittsbildung der Einschaltzeitwerte zu erreichen.

17. Verfahren nach Anspruch 15, das weiterhin aus der Berechnung des Zeitpunkts des stromlosen Zustands der Speicherspule besteht, wobei besagtes Verfahren umfasst:

   - die Bereitstellung eines Boost-Converters mit einer an eine Eingangsspannung angeschlossenen Speicherspule, einem Nebenschlussschalter zur Steuerung eines durch besagte Speicherspule fließenden Stroms, einem Gleichrichtermittel zum Gleichrichten der Ausgangsspannung und mit Spannungsteilern auf der Seite der Stromquelle, der Lastseite und der Lastseite der Drossel, einem A/D-Wandler zur Konvertierung der Messergebnisse und Bezugsspannungen in digitale Werte, und einem digitalen Steuerungsmittel zur Steuerung der Frequenz und der Impulsbreite des besagten Nebenschlussschalters;

- Messung der Teilungsverhältnisse der Spannungsteiler auf der Seite der Stromquelle und auf der Lastseite der Speicherspule während des kurzen Zeitraums, in dem kein Strom durch die Drossel fließt;

- Messung der Eingangsspannung unter Beachtung der stromquellenseitig gemessenen Teilungsverhältnisse der Spannungsteiler;

- Einschalten des besagten Nebenschlussschalters für eine bestimmte Zeit,

- Öffnen des besagten Nebenschlussschalters nach besagter Zeit;

- Messung der Teilungsverhältnisse der Spannungsteiler auf der Ausgangsseite des Boost-Converters und auf der Ausgangsseite der Speicherspule während des Zeitraums, in dem Energie übertragen wird und das Gleichrichtermittel unter Vorwärtsspannung steht, und damit die Spannung zum Beispiel an der Diode im Vergleich zu den gemessenen Spannungen niedrig ist;

- Messung der Eingangsspannung und der lastseitigen Spannung unmittelbar nach dem Öffnen des besagten Nebenschlussschalters unter Beachtung der stromquellen- und lastseitig gemessenen Teilungsverhältnisse der Spannungsteiler. Sind die Schaltintervalle bezogen auf die Quellenfrequenz kurz, können besagte Messungen gleichzeitig mit der oben genannten Messung der Eingangsspannung direkt vor dem Einschalten des Nebenschlussschalters durchgeführt werden;

- Berechnung des besagten Zeitpunkts des stromlosen Zustands; und

- Hinzufügen des besagten Zeitpunkt des stromlosen Zustands zum Punkt der abfallenden Flanke besagter Zeit und, falls erforderlich, Hinzufügen einer zusätzlichen Sicherheitsspanne, um den Zeitpunkt zu erhalten, zu dem besagter Schalter wieder geschlossen werden kann.

18. Verfahren nach Anspruch 17, wobei eine Diode als Gleichrichter verwendet und der Zeitpunkt des stromlosen Zustands gemäß folgender Gleichung berechnet wird:

$$T_{TR} = \frac{U_1 * T_{ON}}{Uc+0,7V - U_1}$$

wobei $U_1$ die stromquellenseitig gemessene Spannung, $U_C$ die lastseitig gemessene Spannung und $T_{ON}$ die Impulsbreite des besagten Nebenschlussschalters ist.

19. Verfahren nach Anspruch 17 umfassend:

- Bereitstellung eines Boost-Converters mit einer an eine Eingangsspannung angeschlossenen Speicherspule, einem Nebenschlussschalter zur Steuerung eines durch besagte Speicherspule fließenden Stroms, einem Gleichrichtermittel zum Gleichrichten der Ausgangsspannung und mit Spannungsteilern auf der Seite der Stromquelle, der Lastseite und der Lastseite der Drossel, einem A/D-Wandler zur Konvertierung der Messergebnisse und Bezugsspannungen in digitale Werte, und einem digitalen Steuerungsmittel zur Steuerung der Frequenz und der Impulsbreite des besagten Nebenschlussschalters;

- Messung der Eingangsspannung;

- Einschalten des besagten Nebenschlussschalters für eine bestimmte Zeit;

- Öffnen des besagten Nebenschlussschalters nach besagter Zeit;

- Messung der Eingangsspannung und lastseitigen Spannung unmittelbar nach dem Öffnen des besagten Nebenschlussschalters. Sind die Schaltintervalle bezogen auf die Quellenfrequenz kurz, können besagte Messungen gleichzeitig mit der oben genannten Messung der Eingangsspannung direkt vor dem Einschalten des Nebenschlussschalters durchgeführt werden;

- Vergleich der lastseitig gemessenen Spannung mit der Bezugsspannung;

- Anpassung der übertragenen Energie durch Korrekturen der Einschaltzeit des besagten Nebenschlussschalters entsprechend den Ergebnissen besagter Vergleiche, um eine Äquivalenz zwischen der Ausgangsspannung und der Bezugsspannung zu erreichen; Umschalten zwischen den benachbarten Werten der Einschaltzeit des Nebenschlussschalters ($T_ON$), um eine Feineinstellung der übertragenen Energie durch Bildung des Durchschnitts von Einschaltzeitwerten zu erreichen, falls kleine Unterschiede zwischen der lastseitigen Spannung und der Bezugsspannung bestehen;

- Berechnung des besagten Zeitpunkts des stromlosen Zustands;

- Berechnung des besagten Zeitpunkts des stromlosen Zustands; und

- Hinzufügen des besagten Zeitpunkt des stromlosen Zustands zum Punkt der abfallenden Flanke besagter Zeit und, falls erforderlich, Hinzufügen einer zusätzlichen Sicherheitsmarge, um den Zeitpunkt zu erhalten, zu dem besagter Schalter wieder geschlossen werden kann.

20. Verfahren nach Anspruch 19, wobei eine Diode als Gleichrichter verwendet und der Zeitpunkt des stromlosen Zustands gemäß folgender Gleichung berechnet wird:

$$T_{TR} = \frac{U_1 * T_{ON}}{Uc+0{,}7V - U_1}$$

wobei $U_1$ die stromquellenseitig gemessene Spannung, $U_C$ die lastseitig gemessene Spannung und $T_{ON}$ die Impulsbreite des besagten Nebenschlussschalters ist.

## Revendications

1. Un convertisseur booster en mode discontinu comportant :

    - une inductance de stockage (L) connectée à un potentiel d'entrée (U1),
    - un commutateur parallèle (S) commandant un courant s'écoulant au travers de ladite inductance de stockage (L) ,
    - un moyen de redressement (D) pour redresser le potentiel de sortie (Uc),
    - des diviseurs de tension (Z11, Z12, Z21, Z22, Z31, Z32) du côté source, du côté de la charge et du côté de la charge de l'inductance (L),
    - un convertisseur A/D pour la conversion de résultats de mesures en valeurs numériques, et
    - des moyens de commande numérique (Commande Numérique) pour le calibrage des ratios des diviseurs de tension, le convertisseur étant **caractérisé en ce que** les moyens de commande numérique (Commande Numérique) sont adaptés à :
    - la mesure des ratios des diviseurs de tension du côté source (Z11, Z12) et du côté charge (Z21, Z22) de l'inductance de stockage (L) durant une courte période au cours de laquelle aucun courant ne circule au travers l'inductance (L),
    - la mesure des ratios des diviseurs de tension du côté de sortie (Z31, Z32) du convertisseur booster et du côté de sortie de l'inductance de stockage (Z21, Z22) pendant la période de transfert d'énergie et de conduction directe du moyen de redressement (D) et, par suite, le potentiel au moyen de redressement est faible par rapport aux potentiels mesurés; et
    - le calibrage des ratios des diviseurs de tension durant le fonctionnement du convertisseur booster, dans lequel les ratios calibrés des diviseurs de tension sont pris en considération pour la définition de la valeur réelle des potentiels requis pour la commande du système complet.

2. Le système selon la revendication 1 comportant l'utilisation d'un correcteur de facteur de puissance dans le convertisseur booster.

3. Le système selon la revendication 1 dans lequel lesdits moyens de commande numérique utilisent des moyens basés sur le fonctionnement ON dudit commutateur parallèle et les potentiels mesurés du côté source et du côté de la charge pour déterminer le moment de l'annulation du courant , ajoutant une marge de sécurité pour compenser en tant que de besoin les inexactitudes de la mesure et, en outre, pour engager la recharge de l'inductance de stockage au moyen de l'unité de commande numérique juste postérieurement à ce moment.

4. Le système selon la revendication 3 comportant l'utilisation d'un correcteur de facteur de puissance dans le convertisseur booster.

5. Le système selon la revendication 1 dans lequel lesdits moyens de commande numérique utilisent des moyens basés sur le potentiel mesuré du côté charge et sur la comparaison dudit potentiel avec un potentiel de référence pour opérer un ajustement fin de l'énergie transférée et ce par un réglage fin de la largeur d'impulsion dudit commutateur parallèle minimisant la distorsion et les harmoniques , surmontant les limitations des degrés temporels discrets des systèmes numériques d'horloge, en touchant entre des valeurs temporelles ON voisines au moyen d'un calcul moyen des valeurs temporelles ON dudit commutateur utilisant des motifs ou un modulateur numérique sigma delta.

6. Le système selon la revendication 5 comportant l'utilisation d'un correcteur de facteur de puissance dans le convertisseur booster.

7. Le système selon la revendication 1 dans lequel la précision des mesures de potentiels requise pour la commande du système est améliorée par des diviseurs de tension dans lesquels les ratios des diviseurs de tension sont calibrés pendant le fonctionnement du système, et lesdits ratios calibrés des diviseurs de tension sont pris en compte pour définir la valeur précise des potentiels.

8. Le système selon la revendication 7 comportant l'utilisation d'un correcteur de facteur de puissance dans le convertisseur booster.

9. Le système selon la revendication 3 dans lequel lesdits moyens de commande numérique utilisent des moyens basés sur le fonctionnement ON dudit commutateur parallèle et les potentiels mesurés du côté source et du côté de la charge pour déterminer le moment de l'annulation du courant, ajoutant une marge de sécurité pour compenser en tant que de besoin les inexactitudes de la mesure et, en outre, pour engager la recharge de l'inductance de stockage au moyen de l'unité de commande numérique juste postérieurement à ce moment, dans lequel lesdits moyens de commande numérique utilisent des moyens basés sur le potentiel mesuré du côté charge et sur la comparaison dudit potentiel avec un potentiel de référence pour opérer un ajustement fin de l'énergie transférée et ce par un réglage fin de la largeur d'impulsion dudit commutateur parallèle minimisant la distorsion et les harmoniques, surmontant les limitations des degrés temporels discrets des systèmes numériques d'horloge, en touchant entre des valeurs temporelles ON voisines au moyen d'un calcul moyen des valeurs temporelles ON dudit commutateur utilisant des motifs ou un modulateur numérique sigma delta.

10. Le système selon la revendication 9 comportant l'utilisation d'un correcteur de facteur de puissance dans le convertisseur booster.

11. Le système selon la revendication 3 dans lequel lesdits moyens de commande numérique utilisent des moyens basés sur le fonctionnement ON dudit commutateur parallèle et les potentiels mesurés du côté source et du côté de la charge pour déterminer le moment de l'annulation du courant, ajoutant une marge de sécurité pour compenser en tant que de besoin les inexactitudes de la mesure et, en outre, pour engager la recharge de l'inductance de stockage au moyen de l'unité de commande numérique juste postérieurement à ce moment, dans lequel la précision des mesures de potentiels requise pour la commande du système est améliorée par l'utilisation de diviseurs de tension dans lesquels les ratios de division de tension sont calibrés pendant le fonctionnement du système et lesdits ratios calibrés des diviseurs de tension sont pris en compte pour définir la valeur précise des potentiels.

12. Le système selon la revendication 11 comportant l'utilisation d'un correcteur de facteur de puissance dans le convertisseur booster.

13. Le système selon la revendication 5 dans lesquels lesdits moyens de commande numérique utilisent des moyens basés sur le potentiel mesuré du côté charge et d'une comparaison dudit potentiel avec un potentiel de référence pour un ajustement fin de l'énergie transférée au moyen d'un réglage fin de la largeur d'impulsion dudit commutateur parallèle minimisant la distorsion et les harmoniques, surmontant les limitations des degrés temporels discrets des systèmes numériques d'horloge, en touchant entre des valeurs temporelles ON (largeur d'impulsion) voisines au moyen d'un calcul moyen des valeurs temporelles ON dudit commutateur utilisant des motifs ou un modulateur numérique sigma delta, dans lequel la précision des mesures de potentiels requise pour la commande du système est améliorée par l'utilisation de diviseurs de tension dans lesquels les ratios de division de tension sont calibrés pendant le fonctionnement du système et lesdits ratios calibrés des diviseurs de tension sont pris en compte pour définir la valeur précise des potentiels.

14. Le système selon la revendication 13 comportant l'utilisation d'un correcteur de facteur de puissance dans le convertisseur booster.

15. Une méthode pour améliorer la précision de mesure des potentiels requis pour la commande d'un convertisseur boost en mode discontinu, ladite méthode utilisant un calibrage des tolérances des diviseurs de tension du côté charge, du côté de l'inductance, et du côté source à des instants prédéterminés au travers une mesure des ratios de division de tension, en prenant en considération la faible influence du potentiel de polarisation directe d'une diode , autorisant ainsi l'utilisation de diviseurs de tension tolérants, ladite méthode comportant :

- fournir un convertisseur booster en mode discontinu, comportant une inductance de stockage (L) connectée à un potentiel d'entrée (U1), un commutateur parallèle (S) commandant un courant s'écoulant au travers de ladite inductance de stockage (L), un moyen de redressement (D) pour redresser le potentiel de sortie (UC), des diviseurs de tension (Z11, Z12, Z21, Z22, Z31, Z32) du côté source, du côté de la charge et du côté de charge de l'inductance (L), un convertisseur A/D pour la conversion de résultats de mesures en valeurs numériques, et des moyens de commande numérique (Commande Numérique) pour le calibrage des ratios des diviseurs de tension, la méthode étant **caractérisée par** les étapes suivantes
- la mesure des ratios des diviseurs de tension du côté source (Z11, Z12) et du côté charge (Z21, Z22) de l'inductance de stockage (L) durant une courte période au cours de laquelle aucun courant ne circule au travers l'inductance (L),
- la mesure des ratios des diviseurs de tension du côté de sortie (Z31, Z32) du convertisseur booster et du côté de sortie de l'inductance de stockage (Z21, Z22) pendant la période de transfert d'énergie et de conduction directe du moyen de redressement (D) et, par suite, le potentiel au moyen de redressement est faible par rapport aux potentiels mesurés; et
- le calibrage des ratios des diviseurs de tension durant le fonctionnement du convertisseur booster, dans lequel les ratios calibrés des diviseurs de tension sont pris en considération pour la définition de la valeur réelle des potentiels requis pour la commande du système complet.

**16.** La méthode selon la revendication 15 comportant en outre un réglage fin du transfert d'énergie au moyen d'un réglage fin de la largeur d'impulsions du commutateur parallèle, ladite méthode comportant :

la mise à disposition d'un convertisseur booster comprenant une inductance de stockage connectée à un potentiel d'entrée, un commutateur parallèle commandant un courant s'écoulant au travers de ladite inductance de stockage, un moyen de redressement pour redresser le potentiel de sortie et des diviseurs de tension du côté source, du côté de la charge et du côté de charge de l'inductance, un convertisseur A/D pour la conversion de résultats de mesures et des potentiels de référence en valeurs numériques, et des moyens de commande numérique pour commander la fréquence et la largeur d'impulsions dudit commutateur parallèle ;

- la mesure des ratios des diviseurs de tension du côté sortie du convertisseur booster pendant le temps de transfert d'énergie ;
- la mesure du potentiel du côté charge ;
- la comparaison dudit potentiel du côté charge avec un potentiel de référence;
- le réglage de l'énergie transférée au travers des corrections des temps ON dudit commutateur parallèle en fonction des résultats desdites comparaisons afin d'obtenir une équivalence entre le potentiel de sortie et le potentiel de référence; et
- la retouche entre des valeurs voisines du temps ON du commutateur parallèle (Ton) afin de réaliser un réglage fin de l'énergie transférée au moyen d'un calcul de moyenne des durées ON lors de faibles différences entre le potentiel du côté charge ($U_C$) et le potentiel de référence (Uref) .

**17.** Une méthode selon la revendication 15 comportant de surcroît le calcul du moment de l'annulation du courant de l'inductance de stockage, ladite méthode comportant :

- la mise à disposition d'un convertisseur booster comprenant une inductance de stockage connectée à un potentiel d'entrée, un commutateur parallèle commandant un courant s'écoulant au travers de ladite inductance de stockage, un moyen de redressement pour redresser le potentiel de sortie et des diviseurs de tension du côté source, du côté de la charge et du côté de charge de l'inductance, un convertisseur A/D pour la conversion de résultats de mesures et des potentiels de référence en valeurs numériques, et des moyens de commande numérique pour commander la fréquence et la largeur d'impulsions dudit commutateur parallèle ;

la mesure des ratios des diviseurs de tension du côté source et du côté charge de l'inductance de stockage durant le bref instance au cours duquel aucun courant ne circule au travers l'inductance ;

- la mesure du potentiel d'entrée en prenant en considération les ratios mesurés des diviseurs de tension du côté source;
- la mise en conduction pour un temps dudit commutateur parallèle;
- la mise hors conduction dudit commutateur parallèle postérieurement audit temps;
- la mesure des ratios des diviseurs de tension du côté sortie du convertisseur booster et du côté sortie de ladite inductance de stockage pendant la période de transfert d'énergie et de polarisation directe du moyen de redressement et, par suite, le potentiel de la diode par exemple est faible par rapport aux potentiels mesurés;
- la mesure du potentiel d'entrée et du potentiel côté charge immédiatement après l'ouverture dudit commutateur parallèle en prenant en considération la mesure des ratios des diviseurs de tension du côté source et du côté charge, lorsque les intervalles de commutation sont courts relativement à la fréquence source, lesdites mesures pouvant être effectuées au même moment que la mesure mentionnée ci-dessus du potentiel d'entrée préalablement a l'entrée en conduction dudit commutateur parallèle;
- le calcul de l'instant d'annulation du courant; et
- l'ajout du moment de l'annulation du courant à l'instant du front descendant au même moment et l'ajout supplémentaire d'une marge de sécurité, en tant que de besoin, afin d'obtenir l'instant de fermeture ultérieur du commutateur.

**18.** La méthode selon la revendication 17 dans laquelle une diode est utilisée pour le redressement et l'instant d'annulation du courant est calculé au moyen de l'équation:

$$T_{TR} = \frac{U_1 * T_{ON}}{Uc + 0,7V - U_1}$$

dans laquelle $U_1$ est le potentiel mesuré du côté source, $U_C$ le potentiel mesuré du côté charge et $T_{ON}$ est la largeur d'impulsion dudit commutateur parallèle.

**19.** La méthode selon la revendication 17 comportant :

- la mise à disposition d'un convertisseur booster comprenant une inductance de stockage connectée à un potentiel d'entrée, un commutateur parallèle commandant un courant s'écoulant au travers de ladite inductance de stockage, un moyen de redressement pour redresser le potentiel de sortie et des diviseurs de tension du côté source, du côté de la charge et du côté de charge de l'inductance, un convertisseur A/D pour la conversion de résultats de mesures et des potentiels de référence en valeurs numériques, et des moyens de commande numérique pour commander la fréquence et la largeur d'impulsions dudit commutateur parallèle ;

- la mesure du potentiel d'entrée;

- la mise en conduction pour un temps dudit commutateur parallèle;

- la mise hors conduction dudit commutateur parallèle postérieurement audit temps;

- la mesure du potentiel d'entrée et du potentiel côté charge immédiatement postérieurement à l'ouverture dudit commutateur parallèle, si les intervalles de commutation sont courts relativement à la fréquence source, lesdites mesures pouvant être effectuées au même moment que la mesure mentionnée ci-dessus du potentiel d'entrée préalablement a l'entrée en conduction dudit commutateur parallèle;

- la comparaison du potentiel mesuré côté charge avec le potentiel de référence ;

- le réglage de l'énergie transférée au travers des corrections des corrections des temps ON dudit commutateur parallèle en fonction des résultats desdites comparaisons afin d'obtenir une équivalence entre le potentiel de sortie et le potentiel de référence; et

- la retouche entre des valeurs voisines du temps ON du commutateur parallèle (Ton) afin de réaliser un réglage fin de l'énergie transférée au moyen d'un calcul de moyenne des durées ON lors de faibles différences entre le potentiel du côté charge (UC) et le potentiel de référence (Uref).

- le calcul de l'instant d'annulation du courant, et

- l'ajout du moment de l'annulation du courant à l'instant du front descendant au même moment et l'ajout supplémentaire d'une marge de sécurité, en tant que de besoin, afin d'obtenir l'instant de fermeture ultérieure du commutateur.

**20.** La méthode selon la revendication 19 dans laquelle une diode est utilisée pour le redressement et l'instant d'annulation du courant est calculé au moyen de l'équation:

$$T_{TR} = \frac{U_1 * T_{ON}}{Uc + 0{,}7V - U_1}$$

dans laquelle $U_1$ est le potentiel mesuré du côté source, $U_C$ le potentiel mesuré du côté charge et $T_{ON}$ est la largeur d'impulsion dudit commutateur parallèle.

$$FIG. \quad 1$$

$$FIG. \quad 2A$$

*F I G . 2B*

*F I G . 3*

*F I G . 4*

| | Start with low value of Ton |
|---|---|

| | The input voltage U1 is measured |
|---|---|

| | Turn Switch S on for time Ton |
|---|---|

| | Open Switch S after Ton |
|---|---|

| | Measure input voltate U1 and Voltage Uc on load side immediately after S has been opened. If switching intervals are short related to the source frequency step 4 can be done with step 1 or any time |
|---|---|

$$\text{Calculate } T_{TR} = \frac{U1 * Ton}{Uc + 0.7V - U1}$$

| | Adding $T_{TR}$ to the point of the falling edge of the Ton pulse to get $T_0$ |
|---|---|

| | Add a safety margin, e.g. 1 clock cycle or 100ns. This gives the time point when the switch S can be closed again. |
|---|---|

| | Go to step 51 |
|---|---|

*FIG. 5*

61 — | Measure voltate **Uc** at the load side |

62 — | Compare the measured voltage **Uc** with a reference voltage **Uref** |

63 — | Adjusting the energy transferred through corrections of the ON time of the shunt switch **Ton** according to the result of the comparison of step **62** to achieve equivalence between the voltages **Uc** and **Uref** |

64 — | Toggling between neighboring values of the ON time of the shunt switch **Ton** to achieve fine-tuning of the energy transferred by averaging of ON time values in case of small differences between the voltages **Uc** and **Uref** |

## FIG. 6

During deadtime **Td** no current is
flowing through the storage indicator

Measure voltage dividers ratio $\dfrac{Z12}{Z12+Z11}$
and $\dfrac{Z22}{Z22+Z21}$ during the period no
current is flowing through the
indicator **L**

During the energy transfer time **T_tr**
diode **D** is forward biased. The voltage
across the diode is very low compared
to the voltages to be measured

The voltage divider ratios $\dfrac{Z32}{Z32+Z31}$
and $\dfrac{Z22}{Z22+Z21}$ can be measured during
energy transfer time **T_tr**

Voltage divider ratios are being
calibrated throughout the operation
of the boost converter and considered
to define the real value of the
voltages required to control the
whole system

*FIG. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5757166 A
- US 5861734 A, Fasullo
- US 6178104 B1, Nak-Choon-Choi
- US 6043633 A, Lev
- EP 0582813 A
- DE 3701089 C, STANDARD ELEKTRIK LORENZ AG